# EUROPEAN PATENT SPECIFICATION

(11) **EP 2 999 704 B1**
(45) Date of publication and mention of the grant of the patent: **10.10.2018**
(21) Application number: 13726311.7
(22) Date of filing: 29.07.2013
(51) Int. Cl.: C07D 491/107, C09B 51/00, G01N 31/22, G01N 33/18, F42B 8/20, F42C 1/04, C09B 29/36

(54) **SPIRO[CHROMAN-2,2'-INDOLE]DERIVATIVES AS CYANIDE ION CHEMOSENSORS**
SPIRO[CHROMAN-2,2'-INDOL]DERIVATE ALS CYANIDIONEN-CHEMOSENSOREN
DÉRIVÉS DE SPIRO[CHROMAN-2,2'-INDOLE] À UTILISER EN TANT QUE CHIMIOCAPTEURS D'ION CYANURE

(30) Priority: 21.05.2013 LT 2013050
(43) Date of publication of application: 30.03.2016
(73) Proprietor: Kaunas University of Technology, 44249 Kaunas (LT)
(72) Inventor: SACKUS, Algirdas, 44326 Kaunas (LT); MARTYNAITIS, Vytas, 51390 Kaunas (LT); DAGILIENE, Migle, 53268 Garliava Kauno raj. (LT); KRIKSTOLAITYTE, Sonata, 46326 Kaunas (LT); RAGAITE, Greta, 45261 Kaunas (LT)
(74) Representative: Gerasimovic, Liudmila
(86) International application number: PCT/LT2013/000013
(87) International publication number: WO 2014/189348

(56) References cited:
- WO-A1-2007/028080
- WO-A1-2014/035224
- WO-A2-2008/018894
- E N S G Frumina ET AL: "PULSE PHOTOLYSIS OF SPIROPYRAN IN THE PRESENCE OF ACIDS", Organic Reagents in Analytical Chemistry (3rd All-Union Conference) [in Russian] 579. 12. L. Gatterman and H. Wieland, Laboratory Methods of Organic Chemistry~ Macmillan 13. A. V. Ii'yasov, Ya. SSSR Material from 6th Symposium on Intermolecular Inter, 1 January 1971 (1971-01-01), pages 27-2153, XP055103122, Retrieved from the Internet: URL:http://download.springer.com/static/pd f/195/art%3A10.1007%2FBF00956508.pdf?auth6 6=1392988832_9180fdefc27683e913acea8dfb871 9c1&ext=.pdf [retrieved on 2014-02-19]
- LUCAS HAUSER ET AL: "Reversible photochromism of polynorbornenes bearing spiropyran side groups", MONATSHEFTE FÜR CHEMIE - CHEMICAL MONTHLY ; AN INTERNATIONAL JOURNAL OF CHEMISTRY, SPRINGER-VERLAG, AU, vol. 143, no. 11, 29 August 2012 (2012-08-29), pages 1551-1558, XP035124154, ISSN: 1434-4475, DOI: 10.1007/S00706-012-0827-0
- L.S. Atabekyan and A.K. Chibisov: "PULSE PHOTOLYSIS OF SPIROPYRAN IN THE PRESENCE OF ACIDS", Bulletin of the Academy of Sciences of the USSR Division of Chemical Sicence, vol. 33, no. 7 1 January 1971 (1971-01-01), 1 July 1984 (1984-07-01), pages 1367-1372, XP055103122, DOI: 10.1007/BF00956508 Retrieved from the Internet: URL:https://link.springer.com/article/10.1 007%2FBF00956508 [retrieved on 2014-02-19]

## Description

### Technical Field

The present invention concerns with new spiro[chroman-2,2'-indole] derivatives.
New 1',3',3,4-tetrahydrospiro[chromen-2,2'-indole] compounds may be used for cyanide ion detection in process water and drinking water, as well as in various gaseous emissions, when absorbed by the appropriate solution.

### Background Art

Environmental cyanides are most commonly detected using spectrophotometric analysis of samples collected in solutions of sodium or potassium hydroxides, by potentiometry with cyanide-sensitive electrodes, or gas chromatography with nitrogen specific detector or electron capture detector [J. Ma and P. K. Dasgupta. Anal Chim Acta. 2010 July 19; 673(2): 117-125].

This invention is based on spectrophotometric cyanide detection method in both water and organic solvent environment.

There are known compounds that interact with the cyanide ions to form colored derivatives.

The closest known analogues of cyanide chemosensors are compounds **1** [J. Ren, W. Zhu, H. Tian. Talanta 75 (2008) 760-764] and **2** [PCT Int. Appl. WO2007028080) Colorimetric detection of cyanide with a chromogenic oxazine, F. M. Raymo, M. Tomasulo. US 2008/0305047 A1; Tomasulo M., Raymo F. M. Org. Lett. 2005; 7:4633; Tomasulo M., Sortino S., White A. J. P., Raymo F. M. J. Org. Chem. 2006; 71:744].

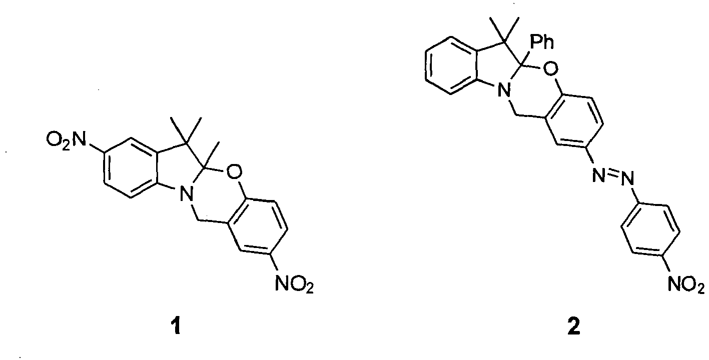

When treating compounds **1** or **2** with cyanide solution, they undergo dissociation of C-O bond, cyanide ion addition to α-carbon atom in indole ring and formation of colored phenolate ion **3.**

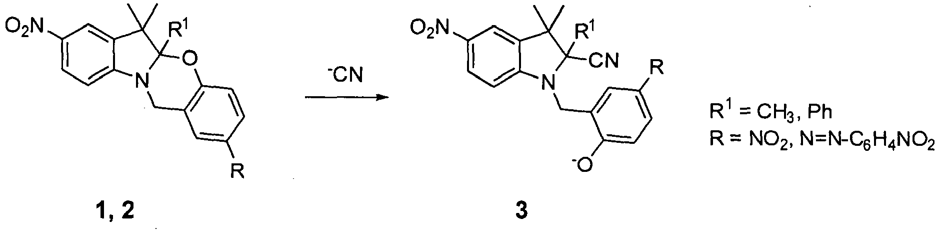

Known compound **1** compared to proposed in present invention does not show a response to cyanide ion as fast as described in the article [J. Ren, W. Zhu, H. Tian. Talanta 75 (2008) 760-764]. Moreover, when cyanide is added to the solution of this compound, an absorbance band position and intensity in the visible part of the spectrum are changing over quite a long time, and it takes about 10 minutes until equilibrium is achieved, which is inconvenient for analysis. In the case of compound **2** as claimed by Raymo F. M. [WO2007028080 (Colorimetric detection of cyanide with a chromogenic oxazine, F. M. Raymo, M. Tomasulo) or US 2008/0305047 A1], synthesis of cyanide selective detector is more complicated, because the production of chlormethylated azoderivative is necessary.

Nowadays there is a demand for materials, that could detect cyanide ion fast, give a stable absorbance band in the visible part of the spectrum and also be easily synthesized from commercially available starting materials. In addition, extending the chemosensory application, it is important that the compounds would be easily modified with a variety of functional groups, such as inserting into polymer structure and the like.

### Disclosure of the Invention

### Summary of the Invention

To achieve this purpose of the present invention new spiroheterocyclic compounds - spiro[chroman-2,2'-indole] derivatives of general structure (I) are proposed 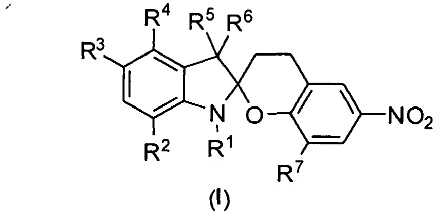 wherein
R¹ is C₁-C₄-alkyl, ω-functionalized alkyl, allyl or benzyl;
R² is hydrogen or methyl;
R³ is hydrogen, F, Cl, Br, methyl, alkoxy, phenyl, 2-phenylethen-1-yl or phenylethinyl;
R⁴ is hydrogen,
or R³ and R⁴ together form a part of condensed cycle: CH=CH-CH=CH;
R⁵, R⁶ each independently denotes methyl, ethyl, or R⁵ and R⁶ form a part of spirocycle: -(CH₂)₄-; -(CH₂)₅-;
R⁷ is hydrogen or nitro group,
on the proviso, that if R⁴ and R⁷ both are hydrogen, then R³ denotes alkoxy.

Preferred examples of new compounds are:
1',1',3'-trimethyl-6-nitro-1',3,3',4-tetrahydrospiro[chromen-2,2'-benz[*e*][2*H*]indole] (**4a**),
3'-ethyl-1',1'-dimethyl-6-nitro-1',3,3',4-tetrahydrospiro[chromen-2,2'-benz[*e*][2*H*]indole] (**4b**),
3'-benzyl-1',1'-dimethyl-6-nitro-1',3,3',4-tetrahydrospiro[chromen-2,2'-benz[*e*][2*H*]indole] (**4c**),
1',3',3'-methyl-5'-methoxy-6-nitro-1',3,3',4-tetrahydrospiro[chromen-2,2'-indole] (**4d**),
1',1'-dimethyl-3'-propyl-6-nitro-1',3,3',4-tetrahydrospiro[chromen-2,2'-benz[*e*][2*H*]indole] (**4e**),
3'-allyl-1',1'-dimethyl-6-nitro-1',3,3',4-tetrahydrospiro[chromen-2,2'-benz[*e*][2*H*]indole] (**4f**).

It turned out that the invention compounds 1',3,3',4-tetrahydrospiro[chromen-2,2'-indoles] of general formula (I) 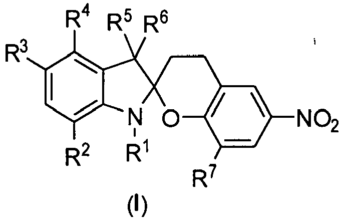 wherein
R¹ is C₁-C₄-alkyl, ω-functionalized alkyl, allyl or benzyl;
R² is hydrogen or methyl;
R³ is hydrogen, F, Cl, Br, methyl, alkoxy phenyl, 2-phenylethen-1-yl or phenylethinyl;
R⁴ is hydrogen;
or R³ and R⁴ together form a part of condensed cycle: CH=CH-CH=CH;
R⁵, R⁶ each independently denotes methyl, ethyl, or R⁵ and R⁶ form a part of spirocycle: -(CH₂)₄-; -(CH₂)₅-;
R⁷ is hydrogen or nitro group,
are possessing sensitivity properties to cyanide ion.

One aspect of the present invention is the use of these compounds of the general formula (I) wherein R¹ is methyl, ethyl, propyl, benzyl, allyl; R² is hydrogen, methyl; R³ is hydrogen, bromine, methyl, methoxy group, nitro group; R⁴ is hydrogen, or R³ and R⁴ together form a part of condensed cycle: CH=CH-CH=CH; R⁵ and R⁶ are both methyls; R⁷ is hydrogen as chemosensors for cyanide ion detection.

More specifically, the properties mentioned are characteristic to the compounds, selected from the group consisting of:
1',1',3'-trimethyl-6-nitro-1',3,3',4-tetrahydrospiro[chromen-2,2'-benz[*e*][2*H*]indole] **(4a)**;
3'-ethyl-1',1'-dimetil-6-nitro-1',3,3',4-tetrahidrospiro[chromen-2,2'-benz[*e*][2*H*]indole] **(4b)**;
3'-benzit-1',1'-dimethyl-6-nitro-1',3,3',4-tetrahydrospiro[chromen-2,2'-benz[*e*][2*H*]indole] (**4c**);
1',3',3'-trimethyl-5'-methoxy-6-nitro-1',3,3',4-tetrahydrospiro[chromen-2,2'-indole] (**4d**);
1',1'-dimethyl-3'-propyl-6-nitro-1',3,3',4-tetrahydrospiro[chromen-2,2'-benz[*e*][2*H*]indole] (**4e**);
3'-allyl-1',1'-dimethyl-6-nitro-1',3,3',4-tetrahydrospiro[chromen-2,2'-benz[*e*][2*H*]indole] (**4f**);
1',3',3',5'-tetramethyl-6-nitro-1',3,3',4-tetrahydrospiro[chromen-2,2'-indole] (**4g**);
1'-ethyl-3',3'-dimethyl-6-nitro-1',3,3',4-tetrahydrospiro[chromen-2,2'-indole] (**4h**);
5'-bromo-1',3',3'-trimethyl-6-nitro-1',3,3',4-tetrahydrospiro[chromen-2,2'-indole] (**4i**);
1'-allyl-3',3'-dimethyl-6-nitro-1',3,3',4-tetrahydrospiro[chromen-2,2'-indole] (**4j**); and
1'-benzyl-3',3'-dimethyl-6-nitro-1',3,3',4-tetrahydrospiro[chromen-2,2'-indole] (**4k**);
Compounds of present invention can be used as chemosensors for detection of cyanide ions.

### Brief description of figures.

The present invention is illustrated by the drawings, where:
Fig. 1 shows UV-Vis absorption spectra of invented compound without cyanide ions and with cyanide ions;
Fig. 2 shows absorption changes (at 422 nm) over time;
Fig. 3 shows linear dependence of absorption intensity of invented compound;
Fig. 4 shows impact of various anions on the decyclization of invented compounds and appearance of colored anion fragment.

### Detailed Description of the Invention

New class of compounds is developed, comprising spiro[chroman-2,2'-indole] derivatives of general formula (**I**). Similarly as in known compounds **1** and **2,** spiro atom presenting in proposed compounds is electrophilic and easily reacts with nucleophilic cyanide ion, inducing cleavage of 3,4-dihydro[2*H*]pyran ring and forming compound **5,** that possess colored fragment of 4-nitrophenolate.

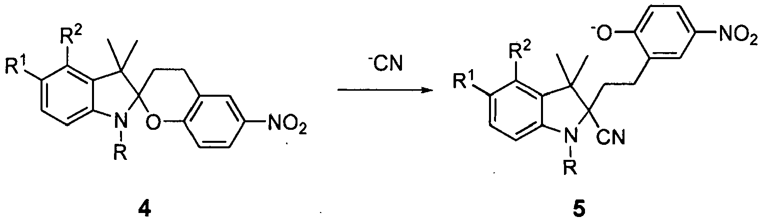

Although known chemosensors **1** and **2** work on a similar principle, compounds proposed in present invention are ahead with faster response to cyanide ions; can be easily modified by alkylation of indole ring nitrogen with various alkylating agents possessing functional and polymer-forming groups; are simple to synthesize from commercially available reagents.

Compounds of present invention - 1',3,3',4-tetrahydrospiro[chromen-2,2'-indoles] - are synthesized by alkylation of 3,3-dimethyl-2-methylen-3*H*-indole with 2-chloromethyl-5-nitrophenol according to scheme 1 shown below:

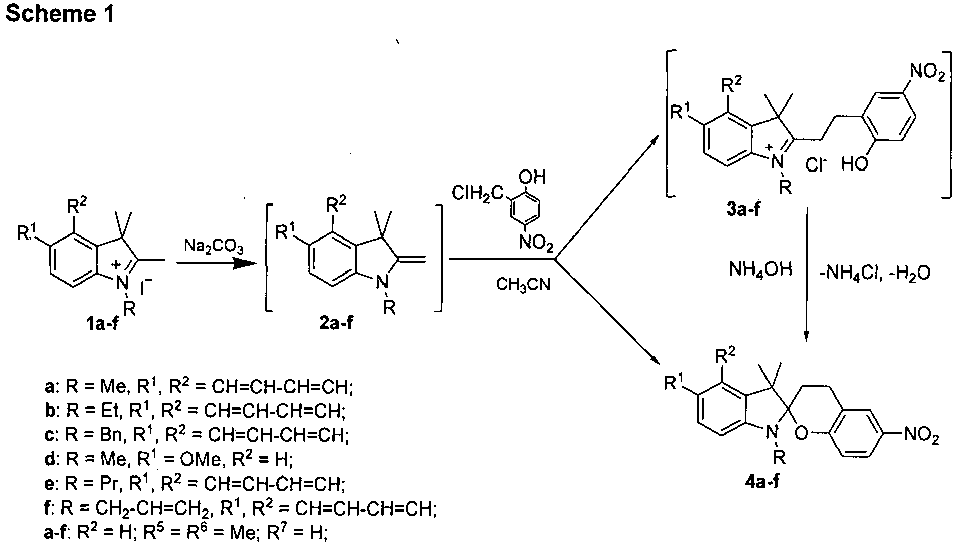

### Modes for Carrying out the invention

Information on examples of real embodiments is provided below, describing the modes of preparation of compounds of present invention (**4a-f**). This information is provided for the illustrative purpose and is not limiting the scope of present invention.

### Example 1

### 1',1',3'-Trimethyl-6-nitro-1',3,3',4-tetrahydrospiro[chromen-2,2'-benz[e][2H]indole] (4a).

To a stirred solution of corresponding 3*H*-indolium salt **1a** (2.1 mmol) in ethanol (35 ml, EtOH/H₂O, 1/6) sodium carbonate was added (0.426 g, 4 mmol); solution became turbid and the reaction mixture was extracted with diethyl ether (3 × 15 ml). Combined organic layer was dried over anhydrous sodium sulfate and solvent was evaporated under reduced pressure, yielding the corresponding enamine. The obtained enamine (0.45 g, 2.0 mmol) was dissolved in acetonitrile (5 ml), then 2-chlormethyl-4-nitrophenol (2.0 mmol) was added to the solution and the reaction mixture was stirred for 1 h at 20 °C temperature. The formed crystals were filtered and washed with diethyl ether. The obtained crystals (0,62 g) were suspended in ethanol (10 ml, 96%); water (60 ml), few drops of aqueous solution of ammonia, and diethyl ether (50 ml) were added and the mixture was stirred at room temperature for 4 h. Then organic layer was separated, dried over anhydrous sodium sulfate and solvent was evaporated under reduced pressure. The obtained compound was recrystallized from acetonitrile.

Yield 67%, yellow crystals, m.p. = 171-174 °C. ¹H NMR (CDCl₃): δ 1.53 (br.s, 6H, 2×3'CH₃), 2.43 (br.s, 2H, CH₂), 2.94 (s, 3H, N-CH₃), 3.11 (br.s, 2H, CH2), 6.74 (d, *J* = 9.2 Hz, 1H, 8H), 7.02 (d, *J* = 8.4 Hz, 1H, 4'H), 7.22 (dt, *J* = 7.4 Hz, *J* = 1.2 Hz, 1H, 7'H), 7.40 (dt, *J* = 7.4 Hz, *J* = 1.2 Hz, 1H, 8'H), 7.76 (d, *J* = 7.4 Hz, 1H, 9'H), 7.80 (d, *J* = 8.4 Hz, 1H, 5'H), 7.93 (d, *J* = 7.4 Hz, 1H, 6'H), 7.98 (dd, *J* = 9.2 Hz, *J* = 2.8 Hz, 1H, 7H), 8.06 (d, *J* = 2.8 Hz, 1H, 5H). ¹³C NMR (CDCl₃): δ 23.2 (2×CH₃), 23.5, 24.2, 28.9, 51.6, 105.0, 110.4, 116.7, 121.2, 121.5, 121.7, 124.3, 125.1, 125.7, 126.5, 129.4, 129.5, 129.6, 129.8, 140.5, 146.2, 162.2. IR (cm⁻¹): 3051 (Ar. C-H); (2967 Aliph. C-H); 1518 (NO₂ asymm.); 1331 (NO₂ symm.). Anal. Calcd for C₂₃H₂₂N₂O₃, %: C 73.78; H 5.92; N 7.48. Found: C 73.43; H 6.29; N 7.13.

### Example 2

### 3'-Ethyl-1',1'-dimethy)-6-nitro-1',3,3',4-tetrahydrospiro[chromen-2,2'-benz[e] [2H]indole] (4b).

Synthesis was carried out according to scheme 1 and procedure described in Example 1. Yield 56 %, yellow crystals, m.p. = 168-169 °C. ¹H NMR (CDCl₃): δ 1.28 (t, *J* = 9.6 Hz, 3H, CH₂CH₃), 1.54 (s, 6H, 2×3'CH₃), 2.44 (t, *J* = 7.6 Hz, 2H, 3-CH₂), 3.12 (t, *J* = 7.6 Hz, 2H, 4-CH₂), 3.43 (q, *J* = 9.6 Hz, 2H, CH₂CH₃), 6.74 (d, *J* = 12.0 Hz, 1H, 8H), 7.02 (d, *J* = 11.4 Hz, 1H, 4'H), 7.22 (t, *J* = 10.4 Hz, 1H, 7'H), 7.41 (t, *J* = 10.4 Hz, 1H, 8'H), 7.77 (d, *J* = 10.4 Hz, 1H, 9'H), 7.81 (d, *J* = 11.4 Hz, 1H, 5'H), 7.93 (d, *J* = 10.4 Hz, 1H, 6'H), 7.99 (dd, *J* = 12.0 Hz, *J* = 3.2 Hz, 1H, 7H), 8.08 (d, *J* = 3.2 Hz, 1H, 5H). ¹³C NMR (CDCl₃): δ 15.5, 23.2, 23.4, 23.7, 25.0, 37.7, 51.8, 105.5, 109.9, 116.8, 121.2, 121.5 (2xC), 124.4, 125.2, 125.3, 126.5, 129.3, 129.5, 129.8 (2xC), 140.5, 145.4, 162.2. IR (cm⁻¹): 3056 (Ar. C-H); 2967 (Aliph. C-H); 1519 (NO₂ asymm.); 1329 (NO₂ symm.). MS m/z (%): 389 (M + H⁺, 100). Anal. Calcd for C₂₄H₂₄N₂O₃, %: C 74.21; H 6.23; N 7.21. Found: C 75.60; H 6.50; N 7.39.

### Example 3

### 3'-Benzyl-1',1'-dimethyl-6-nitro-1',3,3',4-tetrahydrospiro[chromen-2,2'-benz[e] [2H]indole] (4c).

Synthesis was carried out according to scheme 1 and procedure described in Example 1. Yield 36%, yellow crystals, m.p. = 180-181 °C. ¹H NMR (CDCl₃): δ 1.54 (s, 3H, 3'-CH₃), 1.60 (s, 3H, 3'-CH₃), 2.11-2.23 (m, 1H, 3-CH₂), 2.44-2.56 (m, 1H, 3-CH₂), 2.86-2.97 (m, 1H, 4-CH₂), 3.05-3.20 (m, 1H, 4-CH₂), 4.45 (AB-d, *J* = 16.2 Hz, 1H, N-CH₂), 4.56 (AB-d, *J* = 16.2 Hz, 1H, N-CH₂), 6.73 (d, *J* = 9.0 Hz, 1H, 8H), 6.77 (d, *J* = 8.6 Hz, 1H, 4'H), 7,17 (t, *J* = 8.0 Hz, 1H, 7'H), 7.20-7.29 (m, 5H, Ph-H) 7.36 (t, *J* = 8.0 Hz, 1H, 8'H), 7.70 (d, *J* = 8.0 Hz, 1H, 9'H), 7.72 (d, *J* = 8.6 Hz, 1H, 5'H), 7,91 (d, *J* = 8.0 Hz, 1H, 6'H), 7,94 (dd, *J* = 9.0 Hz, *J* = 2.8 Hz, 1H, 7H), 7.98 (d, *J* = 2.8 Hz, 1H, 5H). ¹³C NMR (CDCl₃): δ 23.2, 23.5, 24.3, 25.2, 47.2, 52.0, 105.2, 110.5, 116.8, 121,.3, 121.4, 121.9, 124.4, 125.3, 125.5, 126.2 (2×C), 126.6, 127.2 128.9 (2×C), 129.6, 129.7, 129.8, 129.9, 139.5, 140.7, 146.0, 162.2. IR (cm⁻¹): 3056 (Ar. C-H); 2962 (Aliph. C-H); 1515 (NO₂ asymm.); 1334 (NO₂ symm.). MS m/z (%): 451 (M + H⁺, 100). Anal. Calcd for C₂₉H₂₆N₂O₃, %: C 77.31; H 5.82; N 6.22. Found: C 77.49; H 5.42; N 6.39.

### Example 4

### 1',3',3'-Methyl-5'-methoxy-6-nitro-1',3,3',4-tetrahydrospiro[chromen-2,2'-indole] (4d).

Synthesis was carried out according to scheme 1 and procedure described in Example 1, with the difference in that after addition of 2-chlormethyl-4-nitrophenol, the mixture is stirred for 24 h at 75 °C temperature, poured into water (60ml), couple drops of aqueous solution of ammonia and diethyl ether (50 ml) were added and the mixture was stirred at room temperature for 1 h. Then organic layer was separated, dried over anhydrous sodium sulfate and solvent was evaporated under reduced pressure. Obtained compound was purified by column chromatography on silica gel (60 Merck F254, eluent n-hexane/acetone 5/1) and recrystallized from acetonitrile.

Yield 21 %, yellow crystals, m.p. = 137-138 °C. ¹H NMR (400 MHz, CDCl₃): δ 1.24 (s, 6H, 2×3'-CH₃), 2.35 (br.s, 2H, 3-CH₂), 2.81 (s, 3H, N-CH₃), 3.05 (br.s, 2H, 4-CH₂), 3.78 (s, 3H, OMe), 6.5 (d, *J* = 8.2 Hz, 1H, 7'H); 6,69 (d, *J* = 2.6 Hz, 1H, 4'H), 6.73 (dd, *J* = 8.2 Hz, *J* = 2.6 Hz, 1H, 6'H), 6.78 (d, *J* = 8.8 Hz, 1H, 8H), 7.98 (dd, *J* = 8.8 Hz, *J* = 2.8 Hz, 1H, 7H), 8.03 (d, *J* = 2.8 Hz, 1H, 5H). ¹³C NMR (100 MHz, CDCl₃): δ 21.9, 23.5, 24.3, 25.5, 28.9, 49.9, 50.1, 105.0, 107.5, 109.4, 111.8, 116.9, 121.6, 124.3, 125.2, 138.6, 140.6, 142.8, 154.0, 162.1. IR (cm⁻¹): 3063 (Ar. C-H); 2969 (Aliph. C-H); 1503 (NO₂ asymm.); 1329 (NO₂ symm.). MS m/z (%): 355 (M + H⁺, 100). Anal. Calcd for C₂₀H₂₂N₂O₄, %: C 67.78; H 6.26; N 7.90. Found: C 68.02; H 6.38; N 8.23.

### Example 5

### 1',1'-Dimethyl-3'-propyl-6-nitro-1',3,3',4-tetrahydrospiro[chromen-2,2'-benz[e] [2H]indole] (4e).

Synthesis was carried out according to scheme 1 and procedure described in Example 1, with the difference in that after addition of few drops of ammonia and layer of diethyl ether, the mixture was stirred at room temperature for 6 h. Then organic layer was separated, dried over anhydrous sodium sulfate and solvent was evaporated under reduced pressure. Obtained compound was purified by column chromatography on silica gel (60 Merck F254, eluent *n*-hexane/acetone 11/1) and recrystallized from acetonitrile.

Yield 44 %, yellow crystals, m.p. = 151-152 °C. ¹H NMR (CDCl₃): δ 1.0 (t, *J* = 9.8 Hz, 3H, CH₂CH₂CH₃), 1.55 (s, 6H, 2×3'CH₃), 1.68 (hex, *J* = 9.8 Hz, 2H, CH₂CH₂CH₃), 2.44 (br.s, 2H, 3-CH₂), 3.12 (br.s, 2H, 4-CH₂), 3.43 (t, *J* = 9.8 Hz, 2H, CH₂CH₂CH₃), 6.74 (d, *J* = 11.8 Hz, 1H, 8H), 7.01 (d, *J* = 11.2 Hz, 1H, 4'H), 7.21 (t, *J* = 11.0 Hz, 1H, 7'H), 7.41 (t, *J* = 11.0 Hz, 1H, 8'H), 7.76 (d, *J* = 11.0 Hz, 1H, 9'H), 7.81 (d, *J* = 11.2 Hz, 1H, 5'H), 7.93 (d, *J* = 11.0 Hz, 1H, 6'H), 7.99 (dd, *J* = 11.8 Hz, *J* = 3.6 Hz, 1H, 7H), 8.08 (d, *J* = 3.6 Hz, 1H, 5H). ¹³C NMR (CDCl₃): δ 11.7(2×C), 23.5 (2xC), 23.7, 25.2, 45.2, 51.8, 105.4, 110.1, 116.8, 121.2, 121.5, 121.6, 124.4, 125.3 (2×C), 126.5, 129.5, 129.7, 129.8 (2×C), 140.6, 146.0, 162.3. IR (cm⁻¹): 3059 (Ar. C-H); 2964 (Aliph. C-H); 1519 (NO₂ asymm.); 1330 (NO₂ symm.). MS m/z (%): 403 (M + H⁺, 100). Anal. Calcd for C₂₅H₂₆N₂O₃, %: C 74.60; H 6.51; N 6.96. Found: C 75.19; H 6.70; N 7.10.

### Example 6

### 3'-Allyl-1',1'-dimethyl-6-nitro-1',3,3',4-tetrahydrospiro[chromen-2,2'-benz[e] [2H]indole] (4f).

Synthesis was carried out according to scheme 1 and procedure described in Example 3. Obtained compound was purified by column chromatography on silica gel (60 Merck F254, eluent *n*-hexane/acetone 11/1) and recrystallized from acetonitrile.

Yield 26 %, yellow crystals, m.p. = 169-170 °C. ¹H NMR (CDCl₃): δ 1.53 (s, 3H, 3'-CH₃), 1.63 (s, 3H, 3'-CH₃), 2.18-2.32 (m, 1H, 3-CH₂), 2.48-2.61 (m, 1H, 3-CH₂), 2.96-3.10 (m, 1H, 4-CH₂), 3.12-3.27 (m, 1H, 4-CH₂), 2.90 (AB-d, *J* = 18.2 Hz, 1H, N-CH₂), 4.03 (AB-d, *J* = 18.2 Hz, 1H, N-CH₂), 5.17 (d, *J* = 10.4 Hz, 1H, =CH₂) 5.29 (d, *J* = 17.2 Hz, 1H, =CH2), 5.9 (m, 1H, -CH=), 6.75 (d, *J* = 10.2 Hz, 1H, 8H), 6.96 (d, *J* = 8.4 Hz, 1H, 4'H), 7.23 (t, *J* = 8.2 Hz, 1H, 7'H), 7.42 (t, *J* = 8.2 Hz, 1H, 8'H), 7.73 (d, *J* = 8.2 Hz, 1H, 9'H), 7.81 (d, *J* = 8.4 Hz, 1H, 5'H), 7.95 (d, *J* = 8.2 Hz, 1H, 6'H), 7.99 (dd, *J* = 10.2 Hz, *J* = 2.2 Hz, 1H, 7H), 8.07 (d, *J* = 2.2 Hz, 1H, 5H). ¹³C NMR (CDCl₃): δ 23.1, 23.5, 24.1, 25.0, 45.8, 51.9, 105.2, 110.5, 115.4, 116.8, 121.3, 121.4, 121.7, 124.4, 125.3 (2×C), 126.6, 129.5, 129.7, 129.8 (2xC), 135.4, 140.6, 145.7, 162.1. IR (cm⁻¹): 3075 (Ar. C-H); 2960 (Aliph. C-H); 1513 (NO₂ asymm.); 1329 (NO₂ symm.). MS m/z (%): 401 (M + H⁺, 100). Anal. Calcd for C₂₅H₂₄N₂O₃, %: C 74.98; H 6.04; N 7.00. Rasta: C 74.79; H 5.96; N 7.00.

Synthesis of some other compounds of this invention is described in patent applications No. LT2012 082, filed 2012-08-30; and No. PCT/LT2012/000006, filed 2012-10-25.

### Example 7

### Interaction with cyanides

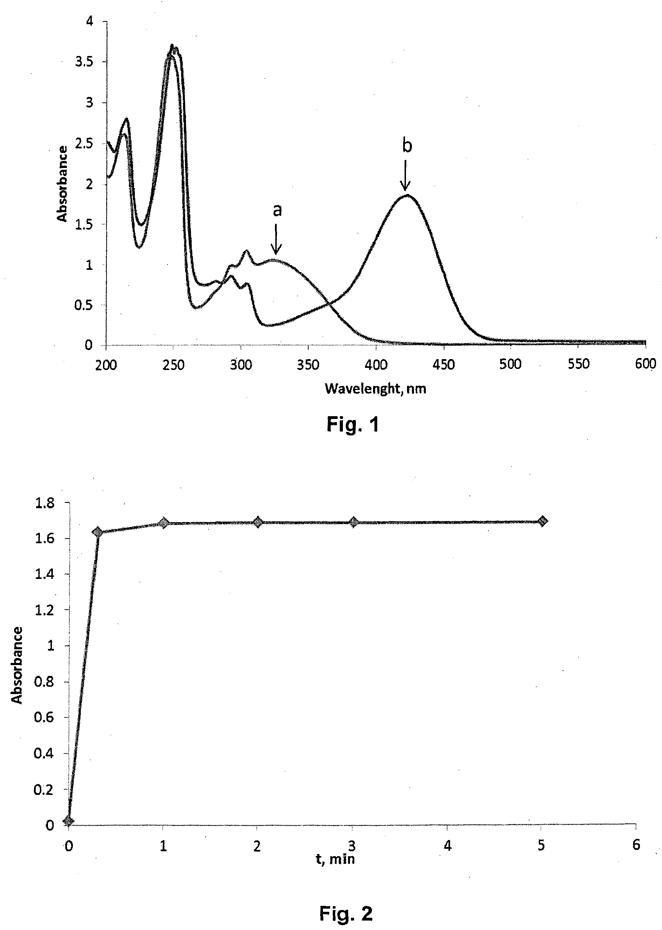

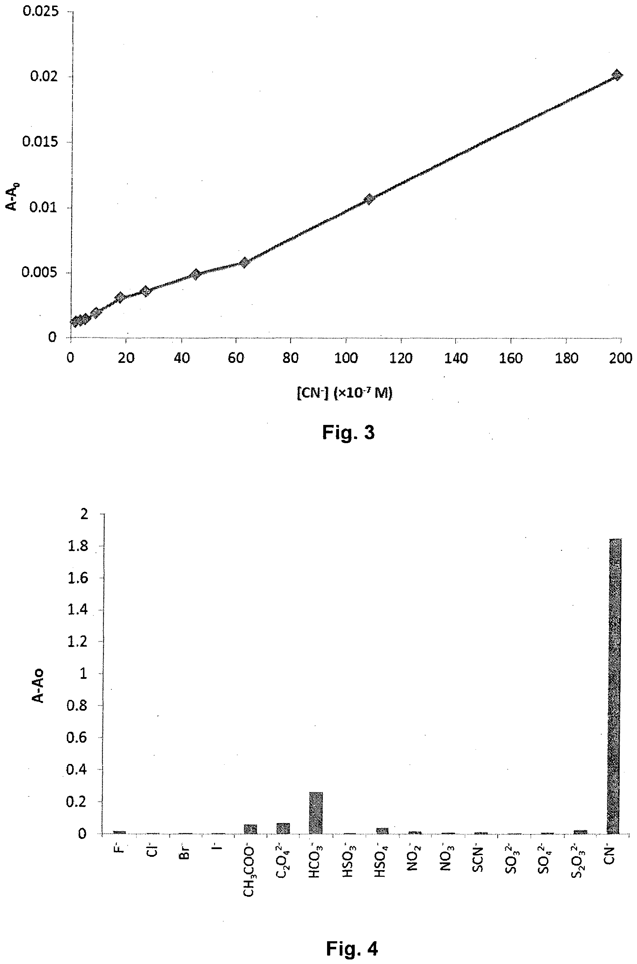

Interaction with cyanide ions was studied spectrophotometrically. Fig.1 shows UV-Vis absorption spectra of **4a** solutions in acetonitrile (0.1 mM, 298 K, CH₃CN/phosphate buffer solution (Na₂HPO₄/NaH₂PO₄, 7.5mM, pH 7.6) (19:1, v/v)) without NaCN (curve a) and with NaCN (making concentration in cuvette 1mM, curve **b**). When treating solution **of 4a** with cyanide, the yellow color of 4-nitrophenolate appears during a certain time, but much faster than treating solution of known compound 1. Fig.2 shows time-dependent absorbance changes (at 422 nm) of **4a** solution (0.1 mM, 298 K) MeCN-H₂O (19:1, v/v) which was mixed with buffer Na₂HPO₄/NaH₂PO₄ (7.5 mM, pH 7.6) and after addition of NaCN (making 1 mM concentration in cuvette). Fig.3. shows linear plot of absorption intensity (at 422 nm) dependence on cyanide concentration. Fig.4 shows influence of CN⁻ ion concentration on the absorbance (at 422 nm) intensity in **4a** solution (0.1 mM, 298 K, CH₃CN/phosphate buffer solution (Na₂HPO₄/NaH₂PO₄, 7.5mM, pH 7.6) (19:1, v/v)).

The more selectively compound reacts with cyanide ions, the easier it is to detect the same ions in the test solution. Fig.4 shows data of the absorption spectra difference (at 422 nm) when different anions are in solution. Diagram shows that response to the absorption difference made by cyanide ions is 6-fold higher than absorption induced by hydrocarbon anions, which interact similarly with compound **4a.**

Chemosensoric properties of some compounds are provided in the table.

**Table**

| Comparison of chemosensoric properties | | | | | | | |
|---|---|---|---|---|---|---|---|
| Compound | R¹ | R², R⁷ | R5, R6 | R³ | R⁴ | Difference absorption at 422 nm, ΔA | Response time, min |
| **1 (known)** | - | H | Me | NO₂ | H | 1.5 | 10 |
| **4a** | **Me** | H | Me | **CH=CH-CH=CH** | | **1.84** | **0.3** |
| **4b** | Et | H | Me | CH=CH-CH=CH | | 1.26 | 1 |
| **4c** | Bn | H | Me | CH=CH-CH=CH | | 1.1 | 1 |
| **4d** | **Me** | H | Me | **MeO** | **H** | **1.74** | **0.3** |
| **4e** | Pr | H | Me | CH=CH-CH=CH | | 1.15 | 1 |
| **4f** | CH₂CH=CH₂ | H | Me | CH=CH-CH=CH | | 1.17 | 1 |
| **4g*** | Me | H | Me | Me | H | 1.22 | 0.5 |
| **4h*** | Et | H | Me | H | H | 1.02 | 0.5 |
| **4i*** | Me | H | Me | Br | H | 1.32 | 5 |
| **4j*** | CH₂CH=CH₂ | H | Me | H | H | 1.16 | 3 |
| **4k*** | Bn | H | Me | H | H | 0.86 | 10 |

As mentioned, synthesis of compounds **4g*-4k*** is described in patent application No.LT2012 082, filed on 2012-08-30, and corresponding application PCT/LT2012/000006. However their properties as cyanide ion sensitive chemosensors, as it is known for authors, never were disclosed or obvious for the persons skilled in the art.

### Industrial applicability

It can be concluded from absorbance difference and response time data provided in the table, that compounds of the present invention can be effectively used as cyanide ion sensitive chemosensors, which - when treated with cyanide ions - are opening 3,4-dihydropyrane ring and forming colored 4-nitrophenolate chromophore. Compounds of the present invention can be used for qualitative detection cyanide ions as well for quantitative detection.

In general, the present invention has the following main advances comparing with the known prior art:
1. Response time of 1',3,3',4-tetrahydrospiro[chromen-2,2'-indoles] to cyanide ions is shorter than of known indolo[2,1-*b*][1,3]benzoxazines; in the presence of cyanide ions with 1',3,3',4-tetrahydrospiro[chromen-2,2'-indoles] maximum color intensity is achieved during ∼20 s, while using compound 1 it takes -10 min.
2. 1',3,3',4-Tetrahydrospiro[chromen-2,2'-indoles] are easily synthesized from available commercial starting reagents;
3. 1',3,3',4-Tetrahydrospiro[chromen-2,2'-indoles] can be easily modified by alkylating them with bifunctional compounds at the indole ring nitrogen, and in such manner it is possible to obtain compounds bearing various functional groups, able to take part in polymerization reactions, to attach to quantum dots and etc.

## Claims

1. Spiro[chroman-2,2'-indoles] of general formula (I) 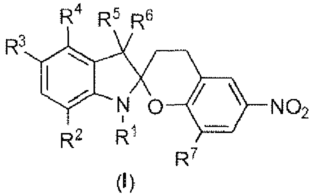 wherein
R¹ is C₁-C₄-alkyl, ω-functionalized alkyl, allyl or benzyl;
R² is hydrogen or methyl;
R³ is hydrogen, F, Cl, Br, methyl, alkoxy, phenyl, 2-phenylethen-1-yl or phenylethinyl;
R⁴ is hydrogen, or R³ and R⁴ together form a part of condensed cycle: CH=CH-CH=CH;
R⁵, R⁶ each independently denotes methyl, ethyl, or R⁵ and R⁶ form a part of cycle: -(CH₂)₄-;-(CH₂)₅-;
R⁷ is hydrogen or nitro group,
on the proviso that if R⁴ and R⁷ both are hydrogens, then R³ is alkoxy,

2. Compound according to claim 1, which is 1',1',3'-trimethyl-6-nitro-1',3,3',4-tetrahydrospiro[chromen-2,2'-benz[*e*][2*H*]indole] (**4a**).

3. Compound according to claim 1, which is 3'-ethyl-1',1'-dimetil-6-nitro-1',3,3',4-tetrahydrospiro[chromen-2,2'-benz[*e*][2*H*]indole] (**4b**).

4. Compound according to claim 1, which is 3'-benzil-1',1'-dimethyl-6-nitro-1',3,3',4-tetrahydrospiro[chromen-2,2'-benz[*e*][2*H*]indole] (**4c**).

5. Compound according to claim 1, which is 1',3',3'-trimethyl-5'-methoxy-6-nitro-1',3,3',4-tetrahydrospiro[chromen-2,2'-indole] (**4d**).

6. Compound according to claim 1, which is 1',1'-dimethyl-3'-propyl-6-nitro-1',3,3',4-tetrahydrospiro[chromen-2,2'-benz[*e*][2*H*]indole] (**4e**).

7. Compound according to claim 1, which is 3'-allyl-1',1'-dimethyl-6-nitro-1',3,3',4-tetrahydrospiro[chromen-2,2'-benz[*e*][2*H*]indole] (**4f**).

8. Use of 1',3,3',4-tetrahydrospiro[chromen-2,2'-indole] derivatives of the general formula (I) 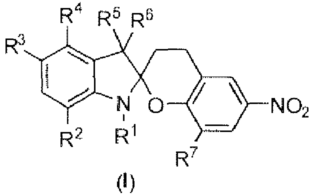 wherein
R¹ is C₁-C₄-alkyl, ω-functionalized alkyl, allyl or benzyl;
R² is hydrogen or methyl;
R³ is hydrogen, F, Cl, Br, methyl, methoxy, phenyl, 2-phenylethen-1-yl or phenylethinyl;
R⁴ is hydrogen,
or R³ and R⁴ together form a part of condensed cycle: CH=CH-CH=CH;
R⁵, R⁶ each independently denotes methyl, ethyl, or R⁵ and R⁶ form a part of spirocycle: -(CH₂)₄-; -(CH₂)₅-;
R⁷ is hydrogen or nitro group,
as chemosensors for cyanide ion detection.

9. The use according to claim 8, wherein R¹ is methyl, ethyl, propyl, benzyl, allyl; R² is hydrogen, methyl; R³ is hydrogen, bromine, methyl, methoxy group, nitro group; R⁴ is hydrogen, or R³ and R⁴ together form a part of condensed cycle: CH=CH-CH=CH; R⁵ and R⁶ are methyls; R⁷ is hydrogen.

10. The use according to claim 8 or 9, wherein compound is selected from the group comprising of:
1',1',3'-trimethyl-6-nitro-1',3,3',4-tetrahydrospiro[chromen-2,2'-benz[*e*][2*H*]indole] (**4a**);
3'-ethyl-1',1'-dimetil-6-nitro-1',3,3',4-tetrahidrospiro[chromen-2,2'-benz[*e*][2*H*]indole] **(4b)**;
3'-benzil-1',1'-dimethyl-6-nitro-1',3,3',4-tetrahydrospiro[chromen-2,2'-benz[*e*][2*H*]indole] (**4c**);
1',3',3'-trimethyl-5'-methoxy-6-nitro-1',3,3',4-tetrahydrospiro[chromen-2,2'-indole] (**4d**);
1',1'-dimethyl-3'-propyl-6-nitro-1',3,3',4-tetrahydrospiro[chromen-2,2'-benz[*e*][2*H*]indole] (**4e**);
3'-allyl-1',1'-dimethyl-6-nitro-1',3,3',4-tetrahydrospiro[chromen-2,2'-benz[*e*][2*H*]indole] (**4f**);
1',3',3',5'-tetramethyl-6-nitro-1',3,3',4-tetrahydrospiro[chromen-2,2'-indole] (**4g**);
1'-ethyl-3',3'-dimethyl-6-nitro-1',3,3',4-tetrahydrospiro[chromen-2,2'-indole] (**4h**);
5'-bromo-1',3',3'-trimethyl-6-nitro-1',3,3',4-tetrahydrospiro[chromen-2,2'-indole] (**4i**);
1'-allyl-3',3'-dimethyl-6-nitro-1',3,3',4-tetrahydrospiro[chromen-2,2'-indole] (**4j**); and
1'-benzyl-3',3'-dimethyl-6-nitro-1',3,3',4-tetrahydrospiro[chromen-2,2'-indole] (**4k**).

## Patentansprüche

1. Spiro[chroman-2,2'-indole] der allgemeinen Formel (**I**) 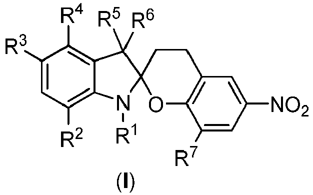 wobei
R¹ für C₁-C₄-Alkyl, ω-funktionalisiertes Alkyl, Allyl oder Benzyl steht;
R² für Wasserstoff oder Methyl steht;
R³ für Wasserstoff, F, Cl, Br, Methyl, Alkoxy, Phenyl, 2-Phenylethen-1-yl oder Phenylethinyl steht;
R⁴ für Wasserstoff steht oder R³ und R⁴ zusammen einen Teil eines kondensierten Rings bilden: CH=CH-CH=CH;
R⁵, R⁶ jeweils unabhängig für Methyl oder Ethyl steht oder R⁵ und R⁶ Teil eines Rings bilden: -(CH₂)₄-; -(CH₂)₅-;
R⁷ für Wasserstoff oder eine Nitrogruppe steht
mit der Maßgabe, dass dann, wenn R⁴ und R⁷ beide für Wasserstoff stehen, R³ für Alkoxy steht.

2. Verbindung nach Anspruch 1, bei der es sich um 1',1',3'-Trimethyl-6-nitro-1',3,3',4-tetrahydro-spiro[chromen-2,2'-benz[e][2*H*]indol] (**4a**) handelt.

3. Verbindung nach Anspruch 1, bei der es sich um 3'-Ethyl-1',1'-dimethyl-6-nitro-1',3,3',4-tetrahydro-spiro[chromen-2,2'-benz[e][2*H*]indol] (**4b**) handelt.

4. Verbindung nach Anspruch 1, bei der es sich um 3'-Benzyl-1',1'-dimethyl-6-nitro-1',3,3',4-tetra-hydrospiro[chromen-2,2'-benz[*e*][2*H*]indol] (**4c**) handelt.

5. Verbindung nach Anspruch 1, bei der es sich um 1',3',3'-Trimethyl-5'-methoxy-6-nitro-1',3,3',4-tetrahydrospiro[chromen-2,2'-indol] (**4d**) handelt.

6. Verbindung nach Anspruch 1, bei der es sich um 1',1'-Dimethyl-3'-propyl-6-nitro-1',3,3',4-tetra-hydrospiro[chromen-2,2'-benz[*e*][2*H*]indol] (**4e**) handelt.

7. Verbindung nach Anspruch 1, bei der es sich um 3'-Allyl-1',1'-dimethyl-6-nitro-1',3,3',4-tetrahydro-spiro[chromen-2,2'-benz[*e*][2*H*]indol] (**4f**) handelt.

8. Verwendung von 1',3,3',4-Tetrahydrospiro[chromen-2,2'-indol]-Derivaten der allgemeinen Formel (I) 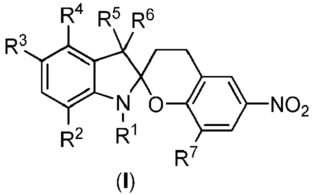 wobei
R¹ für C₁-C₄-Alkyl, ω-funktionalisiertes Alkyl, Allyl oder Benzyl steht;
R² für Wasserstoff oder Methyl steht;
R³ für Wasserstoff, F, Cl, Br, Methyl, Methoxy, Phenyl, 2-Phenylethen-1-yl oder Phenylethinyl steht;
R⁴ für Wasserstoff steht
oder R³ und R⁴ zusammen einen Teil eines kondensierten Rings bilden: CH=CH-CH=CH;
R⁵, R⁶ jeweils unabhängig für Methyl oder Ethyl steht oder R⁵ und R⁶ Teil eines Spirorings bilden: -(CH₂)₄-; -(CH₂)₅-;
R⁷ für Wasserstoff oder eine Nitrogruppe steht,
als Chemosensoren für den Nachweis von Cyanidionen.

9. Verwendung nach Anspruch 8, wobei R¹ für Methyl, Ethyl, Propyl, Benzyl oder Allyl steht; R² für Wasserstoff oder Methyl steht; R³ für Wasserstoff, Brom, Methyl, eine Methoxygruppe oder eine Nitrogruppe steht; R⁴ für Wasserstoff steht oder R³ und R⁴ zusammen einen Teil eines kondensierten Rings bilden: CH=CH-CH=CH; R⁵ und R⁶ für Methyl stehen; R⁷ für Wasserstoff steht.

10. Verwendung nach Anspruch 8 oder neun, wobei die Verbindung aus der Gruppe bestehend aus:
1',1',3'-Trimethyl-6-nitro-1',3,3',4-tetrahydro-spiro[chromen-2,2'-benz[e][2*H*]indol] (**4a**);
3'-Ethyl-1',1'-dimethyl-6-nitro-1',3,3',4-tetra-hydrospiro[chromen-2,2'-benz[*e*][2*H*]indol] (**4b**);
3'-Benzyl-1',1'-dimethyl-6-nitro-1',3,3',4-tetra-hydrospiro[chromen-2,2'-benz[*e*][2*H*]indol] (**4c**);
1',3',3'-Trimethyl-5'-methoxy-6-nitro-1',3,3',4-tetrahydrospiro[chromen-2,2'-indol] (**4d**);
1',1'-Dimethyl-3'-propyl-6-nitro-1',3,3',4-tetra-hydrospiro[chromen-2,2'-benz[*e*][2*H*]indol] (**4e**);
3'-Allyl-1',1'-dimethyl-6-nitro-1',3,3',4-tetra-hydrospiro[chromen-2,2'-benz[*e*][2*H*]indol] (**4f**);
1',3',3',5'-Tetramethyl-6-nitro-1',3,3',4-tetra-hydrospiro[chromen-2,2'-indol] (**4g**);
1'-Ethyl-3',3'-dimethyl-6-nitro-1',3,3',4-tetra-hydrospiro[chromen-2,2'-indol] (**4h**);
5'-Brom-1',3',3'-trimethyl-6-nitro-1',3,3',4-tetrahydrospiro[chromen-2,2'-indol] (**4i**);
1'-Allyl-3',3'-dimethyl-6-nitro-1',3,3',4-tetra-hydrospiro[chromen-2,2'-indol] (**4j**) und
1'-Benzyl-3',3'-dimethyl-6-nitro-1',3,3',4-tetra-hydrospiro[chromen-2,2'-indol] (**4k**)
ausgewählt ist.

## Revendications

1. Spiro[chroman-2,2'-indoles] de formule générale (I) 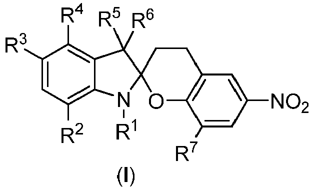 dans laquelle
R¹ est C₁-C₄-alkyle, alkyle, allyle ou benzyle ω-fonctionnalisé ;
R² est hydrogène ou méthyle ;
R³ est hydrogène, F, Cl, Br, méthyle, alcoxy, phényle, 2-phényléthén-1-yle ou phényléthinyle ;
R⁴ est hydrogène, ou R³ et R⁴ forment ensemble une partie de cycle condensé : CH=CH-CH=CH ;
R⁵, R⁶ désignent chacun indépendamment méthyle, éthyle, ou R⁵ et R⁶ forment une partie de cycle : -(CH₂)₄- ;-(CH₂)₅- ;
R⁷ est hydrogène ou un groupement nitro,
à condition que si R⁴ et R⁷ sont tous deux hydrogène, alors R³ est alcoxy.

2. Composé selon la revendication 1, qui est le 1',1',3'-triméthyl-6-nitro-1',3,3',4-tétrahydrospiro-[chromène-2,2'-benz[*e*][2*H*]indole] (**4a**).

3. Composé selon la revendication 1, qui est le 3'-éthyl-l',1'-diméthyl-6-nitro-1',3,3',4-tétrahydrospiro-[chromène-2,2'-benz[*e*][2*H*]indole] (**4b**).

4. Composé selon la revendication 1, qui est le 3'-benzyl-1',1'-diméthyl-6-nitro-1',3,3',4-tétrahydro-spiro[chromène-2,2'-benz[*e*][2*H*]indole] (**4c**).

5. Composé selon la revendication 1, qui est le 1',3',3'-triméthyl-5'-méthoxy-6-nitro-1',3,3',4-tétra-hydrospiro[chromén-2,2'-indole] (**4d**).

6. Composé selon la revendication 1, qui est le 1',1'-diméthyl-3'-propyl-6-nitro-1',3,3',4-tétrahydrospiro[chromène-2,2'-benz[*e*][2*H*]indole] (**4e**).

7. Composé selon la revendication 1, qui est le 3'-allyl-1',1'-diméthyl-6-nitro-1',3,3',4-tétrahydrospiro-[chromène-2,2'-benz[*e*][2*H*]indole] (**4f**).

8. Utilisation de dérivés de 1',3,3',4-tétrahydro-spiro[chromén-2,2'-indole] de formule générale (I) 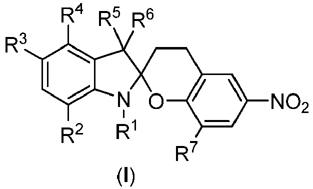 dans laquelle
R¹ est C₁-C₄-alkyle, alkyle, allyle ou benzyle ω-fonctionnalisé ;
R² est hydrogène ou méthyle ;
R³ est hydrogène, F, Cl, Br, méthyle, méthoxy, phényle, 2-phényléthén-1-yle ou phényléthinyle ;
R⁴ est hydrogène, ou R³ et R⁴ forment ensemble une partie de cycle condensé : CH=CH-CH=CH ;
R⁵, R⁶ désignent chacun indépendamment méthyle, éthyle, ou R⁵ et R⁶ forment une partie de cycle spiro : -(CH₂)₄-; -(CH₂)₅- ;
R⁷ est hydrogène ou un groupement nitro,
comme capteurs chimiques pour la détection des ions cyanure.

9. Utilisation selon la revendication 8, dans laquelle R¹ est méthyle, éthyle, propyle, benzyle, allyle ; R² est hydrogène, méthyle ; R³ est hydrogène, brome, méthyle, un groupement méthoxy, un groupement nitro ; R⁴ est hydrogène, ou R³ et R⁴ forment ensemble une partie de cycle condensé : CH=CH-CH=CH ; R⁵ et R⁶ sont méthyle ; R⁷ est hydrogène.

10. Utilisation selon la revendication 8 ou 9, dans laquelle le composé est choisi dans le groupe constitué par :
le 1',1',3'-triméthyl-6-nitro-1',3,3',4-tétrahydro-spiro[chromène-2,2'-benz[*e*][2*H*]indole] **(4a)** ;
le 3'-éthyl-1',1'-diméthyl-6-nitro-1',3,3',4-tétrahydrospiro[chromène-2,2'-benz[*e*][2*H*]indole] (**4b**);
le 3'-benzyl-1',1'-diméthyl-6-nitro-1',3,3',4-tétra-hydrospiro[chromène-2,2'-benz[*e*][2*H*]indole] (**4c**) ;
le 1',3',3'-triméthyl-5'-méthoxy-6-nitro-1',3,3',4-tétrahydrospiro[chromén-2,2'-indole] (**4d**) ;
le 1',1'-diméthyl-3'-propyl-6-nitro-1',3,3',4-tétra-hydrospiro[chromène-2,2'-benz[*e*][2*H*]indole] (**4e**) ;
le 3'-allyl-1',1'-diméthyl-6-nitro-1',3,3',4-tétra-hydrospiro[chromène-2,2'-benz[*e*][2*H*]indole] (**4f**) ;
le 1',3',3',5'-tétraméthyl-6-nitro-1',3,3',4-tétra-hydrospiro[chromén-2,2'-indole] (**4g**) ;
le 1'-éthyl-3',3'-diméthyl-6-nitro-1',3,3',4-tétra-hydrospiro[chromén-2,2'-indole] (**4h**) ;
le 5'-bromo-1',3',3'-triméthyl-6-nitro-1',3,3',4-tétra-hydrospiro[chromén-2,2'-indole] (**4i**) ;
le 1'-allyl-3',3'-diméthyl-6-nitro-1',3,3',4-tétra-hydrospiro[chromén-2,2'-indole] (**4j**) ; et
le 1'-benzyl-3',3'-diméthyl-6-nitro-1',3,3',4-tétra-hydrospiro[chromén-2,2'-indole] (**4k**).
